# EUROPÄISCHE PATENTSCHRIFT

(11) **EP 4 185 844 B1**
(45) Veröffentlichungstag und Bekanntmachung des Hinweises auf die Patenterteilung: **06.08.2025**
(21) Anmeldenummer: 21735246.7
(22) Anmeldetag: 21.06.2021
(51) Int. Cl.: H01Q 1/22, G01F 23/284

(54) **ANTENNE FÜR RADAR-BASIERTE FÜLLSTANDSMESSGERÄTE**
ANTENNA FOR RADAR-BASED FILL LEVEL MEASURING DEVICES
ANTENNE DE DISPOSITIFS RADAR DE MESURE DE NIVEAU DE REMPLISSAGE

(30) Priorität: 23.07.2020 DE 102020119435
(43) Veröffentlichungstag der Anmeldung: 31.05.2023
(73) Patentinhaber: Endress+Hauser SE+Co. KG, 79689 Maulburg (DE)
(72) Erfinder: OTTERSBACH, Pablo, 45149 Essen (DE); MAYER, Winfried, 89290 Buch (DE)
(74) Vertreter: Endress + Hauser Group Services (Deutschland) AG+Co. KG
(86) Internationale Anmeldenummer: PCT/EP2021/066755
(87) Internationale Veröffentlichungsnummer: WO 2022/017701

(56) Entgegenhaltungen:
- DE-A1- 102008 036 963
- DE-A1- 102019 200 500
- DE-A1- 3 117 477
- US-A- 4 566 321
- US-A- 4 670 754
- US-B2- 7 872 610

## Beschreibung

Die Erfindung betrifft eine Antenne für Radar-basierte Füllstandsmessung sowie ein Herstellungsverfahren zur Herstellung einer solchen Antenne.

In der Prozessautomatisierungstechnik werden allgemein Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei ist überwiegend das Pulslaufzeit-Prinzip und das FMCW-Prinzip ("*Frequency Modulated Continuous Wave*") implementiert. Näher beschrieben werden diese Messprinzipien beispielsweise in *"*Radar Level Detection, Peter Devine, 2000*".* Ein zentraler Vorteil Radar-basierter Messverfahren besteht in der Fähigkeit, den Füllstand quasi kontinuierlich messen zu können. Im Kontext dieser Patentanmeldung bezieht sich der Begriff *"Radar"* auf Radar-Signale mit Frequenzen zwischen 0.03 GHz und 300 GHz. Übliche Frequenzbänder, bei denen Füllstandsmessung durchgeführt wird, liegen bei 2 GHz, 6 GHz, 26 GHz oder 79 GHz. Je höher das das Frequenzband gewählt ist, desto schmaler ist der Strahlkegel des abgestrahlten Radar-Signals bei ansonsten gleichen Antennen-Abmessungen. Als Beispiel aus dem Stand der Technik offenbart die deutsche Patentanmeldung DE 10 2019 200 500 A1 Antennen für Füllstandmesser, die eine Linse zur Abstrahlung von Frequenzen im Bereich von 60 GHz bis 320 GHz verwenden.

Unabhängig vom implementierten Messprinzip können die Sende- und Empfangs-Einheiten des Füllstandsmessgerätes bei Radar-Frequenzen ab ca. 20 GHz und höher als gemeinsamer integrierter Schaltkreis realisiert werden. Daher können Füllstandsmessgeräte bei höheren Radar-Frequenzen prinzipiell kompakter und besser montierbar realisiert werden. Zwar kann mit steigender Frequenz auch die Abmessung der einzusetzenden Antenne verkleinert werden, ohne den Strahlkegel ungewollt zu vergrößern. Dennoch weist die Antenne im Vergleich zu den weiteren Komponenten des Füllstandsmessgerätes nach wie vor vergleichsweise große Abmessungen auf. Des Weiteren vergrößert sich der Strahlkegel bzw. es bilden sich Nebenkeulen aus bei Verkleinerung der Antenne. Außerdem erschwert sich die mediendichte Fertigbarkeit der Antenne bei verringerten Abmessungen, da Hinterschnitte und Hohlräume in kleinen Dimensionen kaum fertigbar sind.

Der Erfindung liegt daher die Aufgabe zugrunde, eine effiziente und einfach fertigbare Antenne für Radar-basierte Füllstandsmesstechnik bereitzustellen, mit der das entsprechende Füllstandsmessgerät äußerst kompakt ausgelegt werden kann.

Die Erfindung löst diese Aufgabe durch eine Antenne für Radar-basierte Füllstandsmessgeräte, die folgende Komponenten aufweist:
- Eine Fassung mit einem mediendichten Hohlraum,
- eine Einkoppelstruktur, mittels der ein Radar-Signal entlang einer Hauptstrahlachse in den Hohlraum einkoppelbar ist, und
- eine das Radar-Signal brechende Linse, die den Hohlraum der Fassung derart abdichtet, dass sich die Einkoppelstruktur im Brennpunkt der Linse befindet, und dass die Linse in der Hauptstrahlachse der Einkoppelstruktur ausgerichtet ist.

Dabei bezieht sich der Begriff *"Mediendicht"* im Rahmen der Erfindung auf Partikel- und Flüssigkeits-Undurchlässigkeit, und nicht zwangsweise auch auf Gas- oder Überdruck-Dichtigkeit.

Durch die Linse lässt sich die Antenne erfindungsgemäß äußerst kompakt und mit engem Strahlkegel realisieren. Die Linse ist hinsichtlich des Radar-Signals dementsprechend vorzugsweise konvex oder halbkonvex auszulegen.

Die Effizienz der Antenne lässt sich weiter optimieren, wenn die Linse einen derart auf die Einkoppelstruktur abgestimmten Durchmesser aufweist, dass die Linse die Hauptabstrahlkeule, in welcher die Einkoppelstruktur das Radar-Signal entlang der Hauptstrahlachse aussendet, vollständig abdeckt. Dabei handelt es sich im Kontext der vorliegenden Patentanmeldung bei dem Begriff *"Hauptabstrahlkeule"* um den Bereich, der von denjenigen Raumwinkeln, bei denen sich ausgehend von der Hauptabstrahlachse (also dem Vektor der Maximal-Leistung des ausgesendeten Radar-Signals) die Leistung auf 50 % bzw. um -3 dB verringert hat, eingeschlossen ist. Weiter lässt sich die erfindungsgemäße Antenne hinsichtlich ihrer Effizienz optimieren, wenn die Linse, der Hohlraum und/oder eine dem Hohlraum zugewandte Oberfläche der Linse eine Antireflexschicht für das Radar-Signal aufweisen, wie insbesondere einen ggf. chemisch basierte Oberflächentextur. Auch kann der Hohlraum zumindest in einem Teilbereich eine metallische Beschichtung aufweisen. In Abhängigkeit hiervon lassen sich die Abmessungen der Antenne gegebenenfalls weiter reduzieren.

Durch die kompakte Auslegbarkeit der erfindungsgemäßen Antenne bietet es sich vor allem an, die Antenne in Radar-basierten Füllstandsmessgeräten einzusetzen, deren Sende-/Empfangs-Einheit ausgelegt ist, das zugrundeliegende elektrische Hochfrequenz-Signal mit einer hohen Frequenz von zumindest 60 GHz, insbesondere mehr als 100 GHz zu erzeugen, da bei solch hohen Frequenzen das Füllstandsmessgerät allgemein bereits sehr kompakt ausgelegt werden kann. Ein entsprechendes Füllstandsmessgerät zur Messung eines Füllstands eines in einem Behälter befindlichen Füllgutes umfasst zumindest folgende Komponenten:
- Eine Antenne nach einer der vorhergehend beschriebenen Ausführungsvarianten, wobei die Antenne bzw. das Messgerät derart anzuordnen ist, dass die Hauptabstrahlachse der Antenne in etwa vertikal ausgerichtet ist, um das Radar-Signal gen Füllgut auszusenden, und um das entsprechend am Füllgut reflektierte Empfangs-Signal zu empfangen, und
- eine Sende-/Empfangs-Einheit, die ausgelegt ist,
   ∘ zur Erzeugung des Radar-Signals ein elektrisches Hochfrequenz-Signal in die Einkoppelstruktur der Antenne einzukoppeln,
   ∘ um das Empfangs-Signal über die Einkoppelstruktur auszukoppeln, und
   ∘ um zumindest anhand des ausgekoppelten Empfangs-Signals den Füllstand zu bestimmen.

Dabei ist es im Rahmen der Erfindung nicht relevant, ob die Sende-/Empfangs-Einheit ausgelegt ist, um das Hochfrequenz-Signal gemäß des FMCW-Verfahrens zu erzeugen, bzw. um den Füllstand gemäß des FMCW-Verfahrens zu bestimmen, oder ob das Pulslaufzeit-Prinzip implementiert ist.

In Bezug zu dem Füllstandsmessgerät werden unter dem Begriff *"Einheit"* im Rahmen der Erfindung prinzipiell alle elektronischen Schaltungen verstanden, die für den angedachten Einsatzzweck geeignet ausgelegt sind. Es kann sich also um eine Analogschaltung zur Erzeugung bzw. Verarbeitung entsprechender analoger Signale handeln. Es kann sich jedoch auch um eine Digitalschaltung wie einem FPGA oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Messgerätes im Sinne der Erfindung potenziell auch auf einen gemeinsamen physikalischen Speicher zurückgreifen bzw. mittels derselben physikalischen Digitalschaltung betrieben werden.

Vorteilhaft an der erfindungsgemäßen Antenne ist außerdem die potenziell aufwandsarme Fertigbarkeit. Insbesondere der mediendichte Hohlraum lässt sich ohne aufwändige Fertigungsschritte realisieren, wenn die Fassung auf Basis von zumindest zwei Teilkomponenten hergestellt wird. Hierzu sind die Teilkomponenten so zu konzipieren, dass jeweils eine der Teilkomponenten neben der reinen Fassungs-Form die Linse und/oder die Einkoppelstruktur umfasst, und dass die Teilkomponenten jeweils eine korrespondierende Füge-Naht entlang des Hohlraums umfassen. Das entsprechende Verfahren zur Fertigung der Antenne sieht in diesem Fall folgende Verfahrensschritte vor:
- Fertigung der ersten Teilkomponente der Fassung,
- Fertigung der zweiten Teilkomponente der Fassung, und
- Anschließendes Fügen der zwei Teilkomponenten entlang der Füge-Naht mittels beispielsweise Schweißen oder Kleben, so dass der Hohlraum mediendicht verschlossen und die Fassung ausgebildet wird.

Dieses Verfahren lässt es zu, dass alle Komponenten der Antenne, also die Fassung, die Einkoppelstruktur und die Linse aus einem gleichen Material, insbesondere einem Kunststoff, bestehen. Hierzu sind entsprechend die erste Teilkomponente und die zweite Teilkomponente aus dem gleichen Material zu fertigen, beispielsweise mittels Spritzgießen oder Heißprägen. Als Kunststoff zur Fertigung der zwei Teilkomponenten kann insbesondere auf PEEK, PFA oder PTFE zurückgegriffen werden, da diese Materialien hinsichtlich der Radar-Brechungseigenschaften einen geeigneten Dielektrizitätswert von größer als 2, insbesondere größer als 4 aufweisen.

Anhand der nachfolgenden Figuren wird die Erfindung näher erläutert. Es zeigt:
Fig. 1: Eine typische Anordnung eines Radar-basierten Füllstandsmessgerätes an einem Behälter, und
Fig. 2: eine erfindungsgemäße Antenne für Radar-basierte Füllstandsmessgeräte.

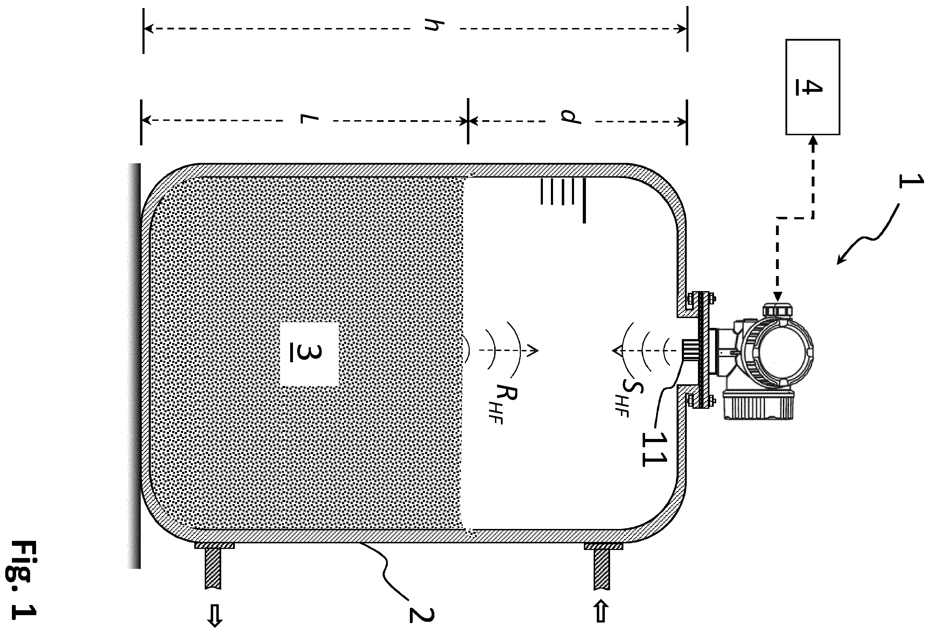

Zum grundsätzlichen Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Einbauhöhe h des Füllstandsmessgerätes 1 über dem Behälterboden bis zu mehr als 100 m betragen.

In der Regel ist das Füllstandsmessgerät 1 über eine Schnittstelle, die auf einem entsprechenden Bussystem wie etwa "Ethernet", "PROFIBUS", "HART" oder "Wireless HART" basiert, mit einer übergeordneten Einheit 4, beispielsweise einem Prozessleitsystem, einer dezentralen Datenbank oder einem Handgerät wie einem Mobilfunkgerät verbindbar. Hierüber können zum einen Informationen über den Betriebszustand des Füllstandsmessgerätes 1 kommuniziert werden. Über die Schnittstelle können jedoch auch weitere Informationen in Bezug zum Füllstand L übermittelt werden.

Da das in Fig. 1 dargestellte Füllstandsmessgerät 1 als frei abstrahlendes Radar ausgelegt ist, umfasst es eine entsprechende Antenne 11. Dabei ist die Antenne 11, bzw. das Füllstandsmessgerät 1 wie in Fig. 1 dargestellt, so ausgerichtet, dass entsprechende Radar-Signale S_{HF} in Richtung des Füllgutes 3 ausgesendet werden. Dabei wird das jeweilige Radar-Signal S_{HF} je nach Messprinzip (Pulslaufzeit oder FMCW) in einer hierzu ausgelegten Sende-/Empfangs-Einheit des Füllstandsmessgerätes 1 generiert und der Antenne 11 zugeführt.

An der Oberfläche des Füllgutes 3 wird das ausgesendete Radar-Signal S_{HF} reflektiert und nach einer korrespondierenden Signallaufzeit durch die Antenne 11 bzw. die nachgeschaltete Sende-/Empfangs-Einheit des Füllstandsmessgerätes 1 als Empfangssignal R_{HF} empfangen. Da die Signallaufzeit der Radar-Signale S_{HF}, E_{HF} linear von der Entfernung d = h - L des Füllstandsmessgerätes 1 zur Füllgut-Oberfläche abhängt, kann die Sende-/Empfangs-Einheit den Füllstand L anhand des Empfangssignals R_{HF} gemäß des jeweils implementierten Messprinzips entsprechend bestimmen.

Das anhand von Fig. 1 erläuterte Füllstandsmessgerät 1 arbeitet bei moderner Auslegung bei einer Radar-Frequenz von 20 GHz oder auch deutlich mehr, bis hin zu 160 GHz. Dementsprechend klein kann die Antenne 11 dimensioniert werden, ohne dass deren Abstrahlkegel zu groß wird und somit bspw. Störreflektionen an der Seitenwand des Behälters 2 erzeugt werden.

Fertigungstechnisch kann eine entsprechend kompakte Antenne 11 jedoch nur schwierig realisiert werden, da sie mit spanabhebenden und somit kostenintensiven Verfahren, wie beispielsweise Drehen gefertigt werden muss, da beispielsweise der Spritzgussprozess zu Lunkerbildung und Einfallstellen in bzw. an der Antenne 11 führen kann. Darüber hinaus weist eine gefüllte, dielektrische Antenne 11, in welcher der Brennweitenraum mit einem Kunststoff gefüllt ist, allgemein einen deutlich schlechteren Wirkungsgrad auf, als klassische Linsenantennen, bei denen im Brennweitenraum Luft oder Vakuum vorherrscht.

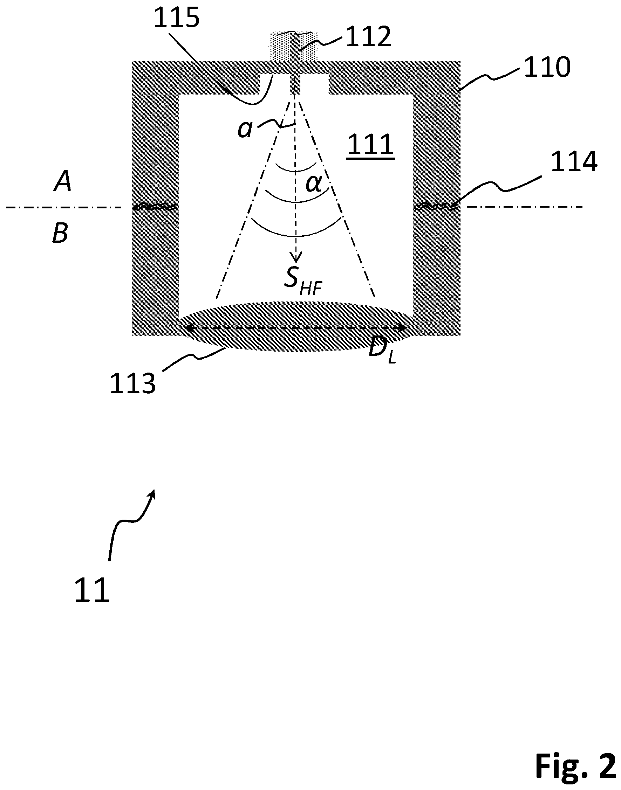

Eine erfindungsgemäße Antenne 11, die unter diesen Gesichtspunkten kompakt auslegbar und leicht fertigbar ist, wird als Querschnitts-Ansicht in Fig. 2 näher dargestellt: Kern der Antenne 11 ist eine Fassung 110. Dabei bildet die Fassung 110 einen Hohlraum 111 aus, welcher als Brennweitenraum fungiert. Wie in Fig. 2 zu erkennen ist, wird der Hohlraum 111 an demjenigen Endbereich der Fassung 110, der im montierten Zustand des Füllstandsmessgerätes 1 gen Füllgut 3 ausgerichtet ist, von einer konvexen Linse 113 abgeschlossen. Gegenüberliegend der Linse 113 ist am Hohlraum 111 eine dielektrische Einkoppelstruktur 112 in die Fassung 110 eingelassen, wobei die Hauptabstrahlachse a der Einkoppelstruktur 112 in den Hohlraum 111 gerichtet ist. Die Einkoppelstruktur 112 dient dazu, das auszusendende Radar-Signal S_{HF} der Sende-/Empfangs-Einheit des Füllstandsmessgerätes 1 über den Hohlraum 111 gen Füllgut 3 auszukoppeln. Zur entsprechenden Kontaktierung mit der Sende-/Empfangs-Einheit kann die Einkoppelstruktur 112 außerhalb der Fassung 110 beispielsweise als dielektrischer Wellenleiter weitergeführt werden, der in seiner Länge gegebenenfalls anpassbar ist (nicht explizit in Fig. 2 dargestellt). Bei der in Fig. 2 gezeigten Ausführungsvariante weist die Fassung 110 hohlraumseitig um die stabförmige Einkoppelstruktur 112 herum zusätzlich eine Rille 115 auf, wodurch ein ungewolltes Einkoppeln des Radar-Signals S_{HF} in die Fassung 110 unterdrückt wird.

Zur Auskopplung des Radar-Signals S_{HF} aus dem Hohlraum 111 gen Füllgut 3 ist die Fassung 110 so ausgelegt, dass sich das stabförmige Ende der Einkoppelstruktur 112 im Brennpunkt der Linse 113 befindet, wobei die Linse 113 in der Hauptstrahlachse a der Einkoppelstruktur 112 ausgerichtet ist. Dadurch wird das Radar-Signal S_{HF} beim Austritt aus der Antenne 11 gen Füllgut 3 entsprechend gebündelt. Durch den resultierenden, engen Sendekegel der Antenne 11 lässt sich diese erfindungsgemäß daher mit sehr kompakten Abmessungen fertigen. Durch die reziproken Eigenschaften für Antennen gilt dies ebenfalls für das einzukoppelnde Empfangs-Signal R_{HF}.

Wie in Fig. 2 angedeutet ist, wird die Effizienz der Antenne 11 weiter erhöht, wenn die Linse 113 bezüglich ihres Durchmessers D_{L} insofern auf die Einkoppelstruktur 112 abgestimmt ist, als dass die Linse 113 breiter als die Hauptabstrahlkeule α der Einkoppelstruktur 112 ist. Im Gegensatz zu der in Fig. 2 gezeigten Ausführungsvariante der Antenne 11 ist es diesbezüglich auch möglich, den Hohlraum 111 nicht zylindrisch bzw. kubisch auszulegen, sondern derart konisch, dass sich der Hohlraum 111 von der Einkoppelstruktur 112 gen Linse 113 hin entsprechend aufweitet. Es versteht sich von selbst, dass die Antenne 11 hinsichtlich ihrer Dimensionierung auf die jeweils verwendete Frequenz des Radar-Signals S_{HF}, R_{HF} abzustimmen ist. Zugunsten der Übersichtlichkeit sind in Fig. 2 etwaige Befestigungsmittel an der Fassung 110 zur Fixierung der Antenne 11 am Füllstandsmessgerät 1 oder am Behälter 2 nicht dargestellt.

Hergestellt werden kann die in Fig. 2 dargestellte Antenne 11 auf Basis zweier separat gefertigter Teilkomponenten A, B, welche durch anschließendes Zusammengefügen die Antenne 11 mitsamt der Fassung 110 bzw. der Linse 113 und der Einkoppelstruktur 112 bilden. Dabei sind die Teilkomponenten A, B bspw. mittels Spritzguss oder Heißprägen zunächst einzeln so zu fertigen, dass die Teilkomponenten A, B zwecks Zusammenfügen eine gemeinsame Füge-Naht 114 aufweisen. Bei der in Fig. 2 gezeigten Ausführungsvariante der Teilkomponenten A, B verläuft die Füge-Naht 114 mittig durch den Hohlraum 110 hindurch, so dass die erste Teilkomponente A die Einkoppelstruktur 112 umfasst, während die zweite Teilkomponente B die Linse 113 umfasst. Prinzipiell ist es im Rahmen der Erfindung jedoch nicht relevant, wo genau die Füge-Naht 114 zwischen den Teilkomponenten A, B verläuft. Nach dem Spritzgießen der Teilkomponenten A, B und vor dem Fügen können die Teilkomponenten A, B im Bereich des späteren Hohlraums 111 optional zudem oberflächenbearbeitet werden, bspw. durch eine metallische Beschichtung oder eine Oberflächentextur auf der Linse 113, so dass die Strahl-Charakteristik der Antenne 11 optimiert wird.

Die anzuwendende Füge-Technik der Teilkomponenten A, B ist unter anderem in Abhängigkeit davon zu wählen, aus welchem Material die Teilkomponenten A, B gefertigt sind. Je nach Material kann beispielsweise Schweißen oder Kleben zum Fügen eingesetzt werden. Hierbei ist es essenziell, dass der entstehende Hohlraum 111 beim Fügen mediendicht, also Partikel- und Feuchte-undurchlässig verschlossen wird. Dadurch wird der Hohlraum 111 vor ungewollter Schmutz-Ansammlung geschützt, so dass die Strahl-Eigenschaften der Antenne 11 durch den Messbetrieb nicht beeinträchtigt werden. Je nachdem, unter welcher Atmosphäre die Teilkomponenten A, B gefügt werden, kann der Hohlraum 111 auch mit einem Vakuum oder einem Inertgas beaufschlagt werden, um die Strahlcharakteristik der Antenne 11 weiter zu verbessern.

Vorteilhaft ist es im Zusammenhang mit dem Fügen der Teilkomponenten A, B außerdem, wenn beide Teilkomponenten A, B aus einem gleichen Material, wie PEEK oder PTFE gefertigt sind, so dass auch die resultierende Fassung 110, die Linse 113 und die Einkoppelstruktur 112 jeweils aus dem gleichen Material bestehen. Bezüglich der Material-Wahl ist hierbei zu berücksichtigen, dass das Material zur Strahl-Brechung in der Linse 113 und zur Strahlführung in der Einkoppelstruktur 112 einen geeigneten Dielektrizitätswert von beispielsweise mindestens 2, optimalerweise größer als 4 aufweist. Vorteilhaft an der Fertigung der Antenne 11 auf Basis zweier Teilkomponenten A, B ist insgesamt, dass der Hohlraum 111 und etwaige spätere Hinterschnitte ohne übermäßigen Material-Aufwand, ohne aufwändige Prozess-Schritte und somit kostengünstig realisiert werden können.

### Bezugszeichenliste

- 1: Füllstandsmessgerät
- 2: Behälter
- 3: Füllgut
- 4: Übergeordnete Einheit
- 11: Antenne
- 110: Fassung
- 111: Hohlraum
- 112: Einkoppelstruktur
- 113: Linse
- 114: Füge-Naht
- 115: Rille
- A, B: Teilkomponenten
- a: Strahl-Achse
- d: Messdistanz
- h: Einbauhöhe bzw. Messbereich
- L: Füllstand
- R_{HF}: Empfangssignal
- S_{HF}: Radar-Signal
- α: Hauptabstrahlkeule

## Patentansprüche

1. Antenne (11) für ein Radar-basiertes Füllstandsmessgerät (1), umfassend:
- Eine Fassung (110) mit einem mediendichten Hohlraum (111),
- eine Einkoppelstruktur (112), mittels der ein Radar-Signal (S_{HF}) entlang einer Hauptstrahlachse (a) in den Hohlraum (111) einkoppelbar ist, und
- eine das Radar-Signal (S_{HF}) brechende Linse (113), die den Hohlraum (111) der Fassung (110) derart abdichtet, dass sich die Einkoppelstruktur (112) im Brennpunkt der Linse (113) befindet, und dass die Linse (113) in der Hauptstrahlachse (a) der Einkoppelstruktur (112) ausgerichtet ist,
**dadurch gekennzeichnet, dass**
die Fassung (110), die Einkoppelstruktur (112) und die Linse (113) aus einem gleichen Kunststoff gefertigt sind.

2. Antenne (11) nach Anspruch 1, wobei die Linse (113) einen derart auf die Einkoppelstruktur (112) abgestimmten Durchmesser aufweist, dass die Linse (113) die Hauptabstrahlkeule (α), in welcher die Einkoppelstruktur (112) das Radar-Signal (S_{HF}) entlang der Hauptstrahlachse (a) aussendet, vollständig abdeckt.

3. Antenne (11) nach Anspruch 1 oder 2, wobei die Linse (113) der Hohlraum (111) und/oder eine dem Hohlraum (111) zugewandte Oberfläche der Linse (113) eine Antireflexschicht für das Radar-Signal (S_{HF}), insbesondere einen Oberflächentextur, aufweist.

4. Antenne (11) nach einem der vorhergehenden Ansprüche, wobei die Linse (113) konvex oder halbkonvex ausgelegt ist.

5. Antenne (11) nach einem der vorhergehenden Ansprüche, wobei der Hohlraum (111) zumindest in einem Teilbereich eine metallische Beschichtung aufweist.

6. Radar-basiertes Füllstandsmessgerät (1) zur Messung eines Füllstands (L) eines in einem Behälter (2) befindlichen Füllgutes (3), folgende Komponenten umfassend:
- Eine Antenne (11) nach einem der vorhergehenden Ansprüche, die derart anordbar ist, dass die Hauptabstrahlachse (a) in etwa vertikal ausgerichtet ist, um das Radar-Signal (S_{HF}) gen Füllgut (3) auszusenden, und um das entsprechend am Füllgut (3) reflektierte Empfangs-Signal (R_{HF}) zu empfangen,
- eine Sende-/Empfangs-Einheit, die ausgelegt ist,
∘ zur Erzeugung des Radar-Signals (S_{HF}) ein entsprechendes Hochfrequenz-Signal in die Einkoppelstruktur (114) einzukoppeln,
∘ um das Empfangs-Signal (R_{HF}) über die Einkoppelstruktur (114) auszukoppeln, und
∘ um zumindest anhand des ausgekoppelten Empfangs-Signals (R_{HF}) den Füllstand (L) zu bestimmen.

7. Füllstandsmessgerät nach Anspruch 6, wobei die Sende-/Empfangs-Einheit ausgelegt ist, um das elektrische Hochfrequenz-Signal mit einer Frequenz von zumindest 60 GHz, insbesondere mehr als 100 GHz zu erzeugen.

8. Füllstandsmessgerät nach Anspruch 6 oder 7, wobei die Sende-/EmpfangsEinheit ausgelegt ist, um das Hochfrequenz-Signal gemäß des FMCW-Verfahrens zu erzeugen, und um den Füllstand (L) gemäß des FMCW-Verfahrens zu bestimmen.

9. Verfahren zur Fertigung der Antenne (11) gemäß einem der Ansprüche 1 bis 5, folgende Verfahrensschritte umfassend:
- Fertigung einer ersten Teilkomponente (A) der Fassung,
- Fertigung einer zweiten Teilkomponente (B) der Fassung,
wobei die erste Teilkomponente (A) und die zweite Teilkomponente (B) aus einem gleichen Kunststoff gefertigt werden,
wobei die Teilkomponenten (A, B) derart konzipiert sind, dass jeweils eine der Teilkomponenten (A, B) die Linse (112) und/oder die Einkoppelstruktur (114) umfasst, und dass die Teilkomponenten (A, B) jeweils eine korrespondierende Füge-Naht (114) entlang des Hohlraums (111) aufweisen, und
- Fügen der zwei Teilkomponenten (A, B) entlang der Füge-Naht (114), so dass der Hohlraum (111) mediendicht verschlossen und die Fassung (110) ausgebildet wird.

10. Verfahren nach Anspruch 9, wobei die erste Teilkomponente (A) und/oder die zweite Teilkomponente (A) mittels Spritzgießen gefertigt werden/wird.

11. Verfahren nach Anspruch 9 oder 10, wobei die Teilkomponenten (A, B) mittels Schweißen oder Kleben gefügt werden.

12. Verfahren nach einem der Ansprüche 9 bis 11, wobei die erste Teilkomponente (A) und die zweite Teilkomponente (B) aus PEEK, PFA oder PTFE gefertigt werden.

## Claims

1. An antenna (11) for a radar-based fill level measuring device (1), comprising:
- A holder (110) with a media-tight cavity (111),
- a coupling structure (112), which can be used to couple a radar signal (SHF) along a main beam axis (a) into the cavity (111), and
- a lens (113) to refract the radar signal (SHF), which seals the cavity of the holder (110) in such a way that the coupling structure (112) is located in the focal point of the lens (113) and that the lens (113) is aligned in the main beam axis (a) of the coupling structure, **characterized in that** the holder (110), the coupling structure (112), and the lens (113) are made from the same type of plastic.

2. The antenna (11) as claimed in claim 1, wherein the lens (113) has a diameter adapted to the coupling structure (112) in such a way that the lens completely covers the main lobe (a), in which the coupling structure (112) emits the radar signal (SHF) along the main beam axis (a).

3. The antenna (11) as claimed in claim 1 or 2, wherein the lens (113), the cavity (111), and/or a surface of the lens (113) facing toward the cavity (111) have/has an anti-reflective coating for the radar signal (SHF), in particular a surface texture.

4. The antenna (11) as claimed in one of the preceding claims, wherein the lens (113) has a convex or semi-convex design.

5. The antenna (11) as claimed in one of the preceding claims, wherein the cavity (111) has a metallic coating at least in a partial area.

6. A radar-based fill level measuring device (1) for measuring a fill level (L) of a filling material (3) located in a container (2), comprising the following components:
- An antenna (11) as claimed in one of the preceding claims, which can be arranged in such a way that the main beam axis (a) is aligned approximately vertically in order to emit the radar signal (SHF) toward the filling material (3) and to receive the receive signal (RHF) correspondingly reflected at the filling material (3),
- a transmitter/receiver unit, which is configured
o to couple a corresponding high-frequency signal into the coupling structure (114) in order to generate the radar signal (SHF),
∘ to outcouple the receive signal (RHF) via the coupling structure (114), and
∘ to determine the fill level (L) at least based on the outcoupled receive signal (RHF).

7. The fill level measuring device as claimed in claim 6, wherein the transmitter/receiver unit is configured to generate the electrical high-frequency signal with a frequency of at least 60 GHz, in particular more than 100 GHz.

8. The fill level measuring device as claimed in claim 6 or 7, wherein the transmitter/receiver unit is configured to generate the high-frequency signal according to the FMCW method and to determine the fill level (L) according to the FMCW method.

9. A method for manufacturing the antenna (11) as claimed in one of claims 1 to 5, comprising the following process steps:
- Manufacturing a first subcomponent (A) of the holder,
- Manufacturing a second subcomponent (B) of the holder,
wherein the first subcomponent (A) and the second subcomponent (B) are made from the same type of plastic,
wherein the subcomponents (A, B) are designed in such a way that each of the subcomponents (A, B) comprises the lens (112) and/or the coupling structure (114) and that each of the subcomponents (A, B) has a corresponding joint seam (114) along the cavity (111), and
- Joining the two subcomponents (A, B) along the joint seam (114), so that the cavity (111) has a media-tight seal and the holder (110) is formed.

10. The method as claimed in claim 9, wherein the first subcomponent (A) and/or the second subcomponent (A) are/is manufactured by means of injection molding.

11. The method as claimed in claim 9 or 10, wherein the subcomponents (A, B) are joined by means of welding or adhesive bonding.

12. The method as claimed in one of claims 9 to 11, wherein the first subcomponent (A) and the second subcomponent (B) are made from PEEK, PFA or PTFE.

## Revendications

1. Antenne (11) pour un transmetteur de niveau radar (1), laquelle antenne comprend :
- un support (110) avec une cavité (111) étanche au produit,
- une structure de couplage (112), au moyen de laquelle un signal radar (S_{HF}) peut être couplé dans la cavité (111) le long d'un axe de rayonnement principal (a), et
- une lentille (113) réfractant le signal radar (S_{HF}), laquelle lentille ferme de manière étanche la cavité (111) du support (110), de telle sorte que la structure de couplage (112) se trouve au foyer de la lentille (113), et que la lentille (113) est orientée dans l'axe de rayonnement principal (a) de la structure de couplage (112),
**caractérisé en ce que** le support (110), la structure de couplage (112) et la lentille (113) sont fabriqués dans une même matière plastique.

2. Antenne (11) selon la revendication 1, pour laquelle la lentille (113) présente un diamètre adapté à la structure de couplage (112) de telle sorte que la lentille (113) recouvre entièrement le lobe de rayonnement principal (α) dans lequel la structure de couplage (112) émet le signal radar (S_{HF}) le long de l'axe de rayonnement principal (a).

3. Antenne (11) selon la revendication 1 ou 2, pour laquelle la lentille (113), la cavité (111) et/ou une surface de la lentille (113) tournée vers la cavité (111) présente une couche antireflet pour le signal radar (S_{HF}), notamment une texture de surface.

4. Antenne (11) selon l'une des revendications précédentes, pour laquelle la lentille (113) est de forme convexe ou semi-convexe.

5. Antenne (11) selon l'une des revendications précédentes, pour laquelle la cavité (111) présente un revêtement métallique au moins dans une zone partielle.

6. Transmetteur de niveau radar (1) destiné à la mesure d'un niveau (L) d'un produit (3) se trouvant dans un réservoir (2), lequel transmetteur comprend les composants suivants :
- une antenne (11) selon l'une des revendications précédentes, laquelle antenne peut être disposée de telle sorte que l'axe de rayonnement principal (a) soit orienté approximativement à la verticale pour émettre le signal radar (S_{HF}) vers le produit (3) et pour recevoir le signal de réception (R_{HF}) réfléchi de manière correspondante sur le produit (3),
- une unité d'émission/réception, laquelle est conçue
∘ pour injecter un signal haute fréquence correspondant dans la structure de couplage (114) afin de générer le signal radar (S_{HF}),
∘ pour découpler le signal de réception (R_{HF}) par l'intermédiaire de la structure de couplage (114), et
∘ pour déterminer le niveau (L) au moins à l'aide du signal de réception (RHF) découplé.

7. Transmetteur de niveau selon la revendication 6, pour lequel l'unité d'émission/réception est conçue pour générer le signal électrique à haute fréquence avec une fréquence d'au moins 60 GHz, notamment supérieure à 100 GHz.

8. Transmetteur de niveau selon la revendication 6 ou 7, pour lequel l'unité d'émission/réception est conçue pour générer le signal à haute fréquence conformément au procédé FMCW et pour déterminer le niveau (L) conformément au procédé FMCW.

9. Procédé destiné à la fabrication de l'antenne (11) selon l'une des revendications 1 à 5, lequel procédé comprend les étapes suivantes :
- Fabrication d'un premier composant partiel (A) du support,
- Fabrication d'un deuxième composant partiel (B) du support, le premier composant partiel (A) et le deuxième composant partiel (B) étant fabriqués à partir d'une même matière plastique,
les composants partiels (A, B) étant conçus de telle sorte que respectivement l'un des composants partiels (A, B) comprend la lentille (112) et/ou la structure de couplage (114), et en ce que les composants partiels (A, B) présentent chacun un joint d'assemblage correspondant (114) le long de la cavité (111), et
- Assemblage des deux composants partiels (A, B) le long du joint d'assemblage (114), de sorte que la cavité (111) est fermée de manière étanche au produit et le support (110) est formé.

10. Procédé selon la revendication 9, pour lequel le premier composant partiel (A) et/ou le deuxième composant partiel (A) est/sont fabriqué(s) au moyen d'un moulage par injection.

11. Procédé selon la revendication 9 ou 10, pour lequel les composants partiels (A, B) sont assemblés par soudage ou collage.

12. Procédé selon l'une des revendications 9 à 11, pour lequel le premier composant partiel (A) et le deuxième composant partiel (B) sont fabriqués en PEEK, PFA ou PTFE.
